# EUROPÄISCHE PATENTSCHRIFT

(11) **EP 0 465 856 B1**
(45) Veröffentlichungstag und Bekanntmachung des Hinweises auf die Patenterteilung: **27.10.1993**
(21) Anmeldenummer: 91109558.6
(22) Anmeldetag: 11.06.1991
(51) Int. Cl.: H05K 5/00, H02G 3/12

(54) **Türanlage, insbesondere Türsprechanlage**
Door installation, especially door interphone
Dispositif de porte, spécialement portier électrique

(30) Priorität: 21.06.1990 DE 4019837
(43) Veröffentlichungstag der Anmeldung: 15.01.1992
(73) Patentinhaber: A. Grothe & Söhne KG, D-50969 Köln (DE)
(72) Erfinder: Loedel, Günter, W-5630 Remscheid (DE); Salah, Gerd, W-5300 Bonn 1 (DE)
(74) Vertreter: Gesthuysen, Hans Dieter, Dipl.-Ing.

(56) Entgegenhaltungen:
- EP-A- 0 060 395
- DE-U- 8 805 209
- GB-A- 2 166 002

## Beschreibung

Die Erfindung betrifft eine Türanlage, insbesondere Türsprechanlage, mit einem Gehäuse, einem rechteckigen Aufnahmerahmen, mehreren rechteckigen, vorzugsweise quadratischen Funktionseinheiten und gegebenenfalls Abdicht- und Verblendmitteln, wobei der Aufnahmerahmen im Gehäuse oder am Gehäuse vorgesehen und vorzugsweise schwenkbar und feststellbar mit dem Gehäuse verbunden ist und die Funktionseinheiten aufnimmt und wobei die Funktionseinheiten ein Funktionselement oder mehrere Funktionselemente, zum Beispiel einen Lautsprecher, ein Mikrofon, mindestens ein Namensschild und/oder mindestens eine Klingeltaste, und Führungs- und Fixierungselemente aufweisen.

Türanlagen, insbesondere Türsprechanlagen sind seit vielen Jahren in unterschiedlichen Ausführungsformen bekannt (vergleiche die FR - B - 2.122.912, die DE - A - 29 21 485, die EP - A - 0 060 395 und DE - U - 88 05 209). Insbesondere sind Türanlagen bekannt, die baukastenförmig aufgebaut sind, bei denen also unterschiedliche Funktionseinheiten modulartig zusammengesetzt werden können (vergleiche die FR - B - 2.122.912, die EP - A - 0 060 395 und die DE - U - 88 05 209).

Bei der bekannten Türanlage, von der die Erfindung ausgeht (vergleiche die EP - A - 0 060 395), ist der rechteckige Aufnahmerahmen durch innerhalb des Aufnahmerahmens verwirklichte Rasterstege zu einem Rasterrahmen ergänzt; es sind also mehrere - quadratische - Rasteröffnungen vorgesehen, die durch den äußeren Aufnahmerahmen und die inneren Rasterstege gebildet und gleich groß sind. Die Funktionseinheiten weisen - notwendigerweise - alle gleiche, den Rasteröffnungen im Rasterrahmen entsprechende Abmessungen auf und sind - senkrecht zur Hauptebene des Rasterrahmens - in die Rasteröffnungen einschiebbar und dort arretierbar; die Position der Funktionseinheiten relativ zum Rasterrahmen ist in der Hauptebene des Rasterrahmens also beim Einschieben die gleiche wie im eingeschobenen Zustand. Die Funktionseinheiten weisen Führungs- und Fixierungselemente auf, die im eingeschobenen Zustand der Funktionseinheiten den Rasterrahmen, also den äußeren Aufnahmerahmen und/oder die inneren Rasterstege hintergreifen.

Bei einer anderen bekannten Türanlage der in Rede stehenden Art, bei der der Aufnahmerahmen aus geraden Profilstücken und die Profilstücke verbindenden Eckstücken zusammengesetzt und nicht zu einem Rasterrahmen ergänzt ist (vergleiche die DE - U - 88 05 209), weisen die Profilstücke Auflageflansche für die Funktionseinheiten auf. Die Funktionseinheiten sind an einer Seite mit Verriegelungshaken und an der anderen Seite mit Stegen versehen. Hinter die Verriegelungshaken können angepaßte Flächen eines Rasterrahmens geschoben werden. Die jeweils oben an den Funktionseinheiten verwirklichten Stege legen sich in eine angepaßte Nut eines Profilstückes beziehungsweise in eine entsprechende Nut an der unteren Seite der jeweils darüberliegenden Funktionseinheit. Bei dieser Türanlage können also die Funktionseinheiten nur in einer vorgegebenen Orientierung eingebaut werden und kann der aus einzelnen Profilstücken bestehende Aufnahmerahmen erst geschlossen werden, wenn alle Funktionseinheiten eingebaut sind.

Die Türanlage, von der die Erfindung ausgeht (vergleiche die EP - A - 0 060 395), ist in ihrer Flexibilität dadurch begrenzt, daß der Rasterrahmen quadratische Rasteröffnungen aufweist und daß alle Funktionseinheiten gleiche, den quadratischen Rasteröffnungen im Rasterrahmen entsprechende äußere Abmessungen aufweisen müssen. Die Türanlage, die zuletzt beschrieben worden ist (vergleiche die DE - U - 88 05 209), erfordert, wie bereits ausgeführt, eine vorgegebene Ausrichtung der einzelnen Funktionseinheiten und einen mehrteiligen Aufnahmerahmen, der erst geschlossen werden kann, wenn alle Funktionseinheiten eingebaut sind.

Der Erfindung liegt nun die Aufgabe zugrunde, die Türanlage, von der die Erfindung ausgeht, so auszugestalten und weiterzubilden, daß sie bezüglich des Zusammensetzens unterschiedlicher Funktionseinheiten noch flexibler ist.

Die erfindungsgemäße Türanlage, bei der die zuvor hergeleitete, und aufgezeigte Aufgabe gelöst ist, ist dadurch gekennzeichnet, daß der Aufnahmerahmen innenseitig an seinen Längsseiten Führungs- und Fixierungsschienen und an seinen Schmalseiten nach außen gerichtete Anschlagleisten aufweist, daß eine Anschlagleiste einstückig mit dem Aufnahmerahmen und die zweite Anschlagleiste als separates Bauteil ausgeführt ist, daß die zweite Anschlagleiste schwenkbar an den Aufnahmerahmen angeschlossen oder in Längsrichtung des Aufnahmerahmens verschiebbar in der Anschlagposition fixierbar ist und daß die Führungs- und Fixierungselemente der Funktionseinheiten im eingebauten Zustand die Führungs- und Fixierungsschienen des Aufnahmerahmens hintergreifen.

Während also bei der Türanlage, von der die Erfindung ausgeht, der Rasterrahmen quadratische Rasteröffnungen aufweist und damit die Funktionseinheiten quadratisch sein müssen, also im Längenmaß und im Breitenmaß vorgegeben sind, handelt es sich bei dem Aufnahmerahmen der erfindungsgemäßen Türanlage um einen "Rahmen im eigentlichen Sinne", durch den zunächst nur das Längenmaß und das Breitenmaß der Türanlage insgesamt vorgegeben ist. Bei der erfindungsgemäßen Türanlage ist also die Möglichkeit gegeben, quadratische Funktionseinheiten, rechteckige Funktionseinheiten und teilweise quadratische, teilweise rechteckige Funktionseinheiten zu verwenden.

Im einzelnen gibt es nun verschiedene Möglichkeiten, die erfindungsgemäße Türanlage auszugestalten und weiterzubilden. Einerseits wird dazu auf die auf den Patentanspruch 1 rückbezogenen Patentansprüche verwiesen. Andererseits ergibt sich das aus der folgenden Beschreibung eines bevorzugten Ausführungsbeispiels der erfindungsgemäßen Türanlage in Verbindung mit der Zeichnung. In der Zeichnung zeigt
- Fig. 1: einen Längsschnitt durch eine erfindungsgemäße Türanlage, ohne das dazu gehörende Gehäuse, wobei eine Funktionseinheit im eingebauten Zustand dargestellt ist, während zwei weitere Funktionseinheiten vor dem Einbau dargestellt sind,
- Fig. 2: einen Querschnitt durch den Gegenstand nach Fig. 1 längs der Linie II - II,
- Fig. 3: den Aufnahmerahmen der erfindungsgemäßen Türanlage nach Fig. 1, ohne Funktionseinheiten, von unten gesehen, und
- Fig. 4: den Aufnahmerahmen der Füranlage nach Fig. 1, ohne Funktionsstreifen, von oben gesehen.

Gegenstand der Erfindung ist eine Türanlage, insbesondere eine Türsprechanlage, die in ihrem grundsätzlichen Aufbau aus einem - nicht dargestellten - Gehäuse, aus einem rechteckigen Aufnahmerahmen 1, aus mehreren, im dargestellten Ausführungsbeispiel aus drei quadratischen Funktionseinheiten 2, 3, 4 und aus - nicht dargestellten - Abdicht- und Verblendmitteln besteht. Bezüglich Einzelheiten des- nicht dargestellten - Gehäuses, der Funktionseinheiten 2, 3, 4 und der - nicht dargestellten - Abdicht- und Verblendmitteln wird ausdrücklich auf die EP - A - 0 060 395, verwiesen.

Da die Figuren, wie bereits ausgeführt, das zu der erfindungsgemäßen Türanlage gehörende Gehäuse nicht zeigen, kann der Zeichnung auch nicht entnommen werden, daß der Aufnahmerahmen 1 im Gehäuse oder am Gehäuse vorgesehen und vorzugsweise schwenkbar und feststellbar mit dem Gehäuse verbunden ist.

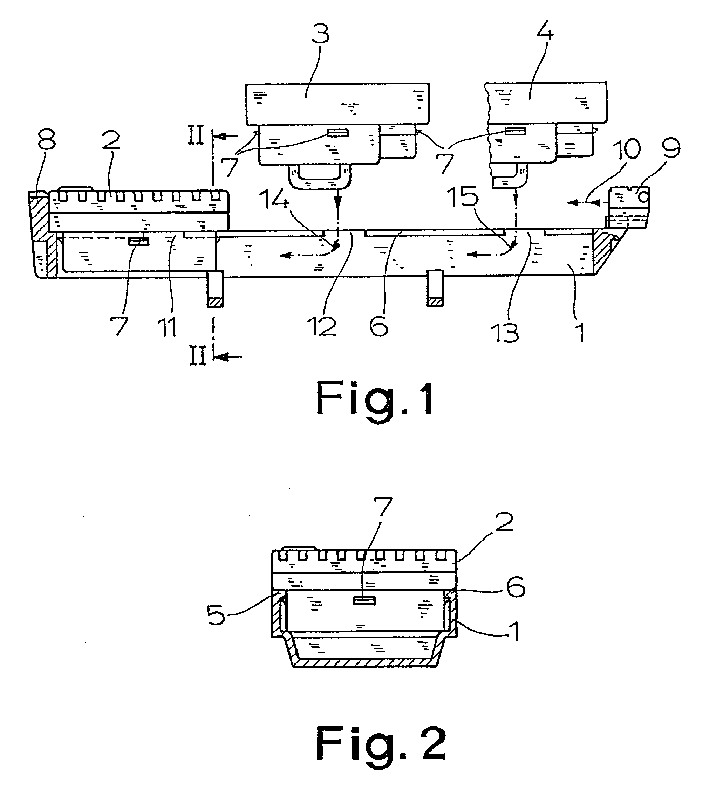

Wie insbesondere die Fig. 1 zeigt, nimmt der Aufnahmerahmen 1 die Funktionseinheiten 2, 3, 4 auf, wobei die Funktionseinheiten 2, 3, 4, wie im einzelnen in der EP - A - 0 060 395 ausgeführt, jeweils ein Funktionselement oder mehrere Funktionselemente aufweisen können; als Funktionselemente können ein Lautsprecher, ein Mikrofon, Namensschilder und Klingeltasten verwirklicht sein.

Wie nun die Figuren zeigen, weist der Aufnahmerahmen 1 innenseitig Führungs- und Fixierungsschienen 5, 6 auf und sind die Funktionseinheiten 2, 3, 4 mit den Führungs- und Fixierungsschienen 5, 6 des Aufnahmerahmens 1 zugeordneten, im eingebauten Zustand (Fig. 1, Funktionseinheit 2) die Führungs- und Fixierungsschienen 5, 6 des Aufnahmerahmens 1 hintergreifenden Führungs- und Fixierungselementen 7 versehen. Im einzelnen weisen die Führungs- und Fixierungsschienen 5, 6 des Aufnahmerahmens einen - in Fig. 2 erkennbaren - rechteckigen Querschnitt auf und liegen die Führungs- und Fixierungsschienen 5, 6 an der nach außen gerichteten Seite des Aufnahmerahmens 1 in der äußeren Hauptebene des Aufnahmerahmens 1 (siehe Fig. 1 und 2).

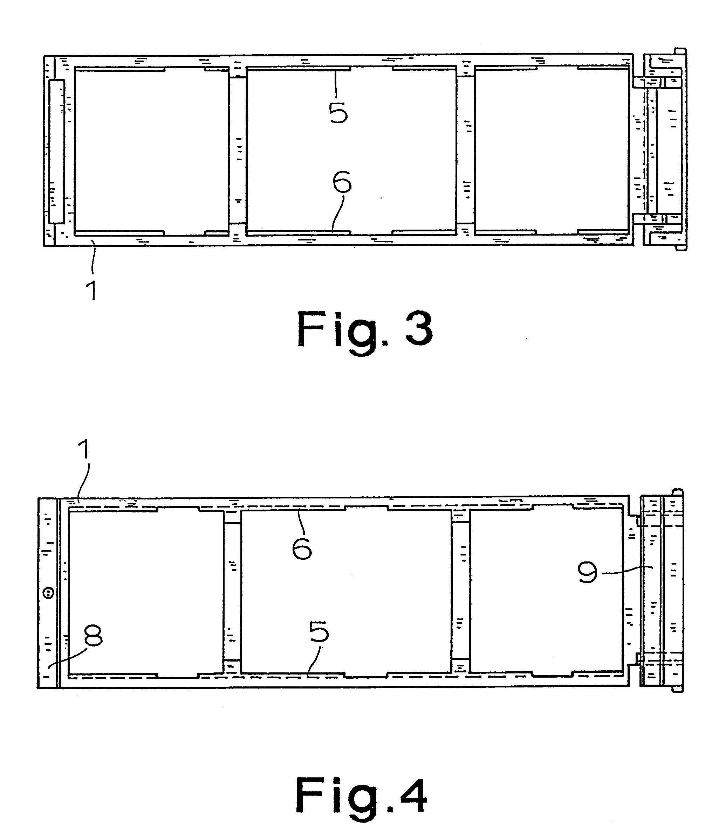

Wie die Figuren insgesamt, insbesondere die Fig. 3 und 4 zeigen, sind die Führungs- und Fixierungsschienen 5, 6 - nur - an den Längsseiten des Aufnahmerahmens 1 vorgesehen. Dazu korrespondiert, daß der Aufnahmerahmen 1 an seinen Schmalseiten nach außen gerichtete Anschlagleisten 8, 9 aufweist. Dabei ist die Anschlagleiste 8 einstückig mit dem Aufnahmerahmen 1 ausgeführt, während die Anschlagleiste 9 als separates Bauteil ausgeführt ist. Die zweite Anschlagleiste könnte schwenkbar an den Aufnahmerahmen angeschlossen sein. Dargestellt ist jedoch ein Ausführungsbeispiel, bei der die Anschlagleiste 9 in Längsrichtung des Aufnahmerahmens 1 verschiebbar und in der Anschlagposition fixierbar ist; das ist in Fig. 1 mit dem Pfeil 10 angedeutet.

Denkbar wäre eine Ausführungsbeispiel, bei dem die Führungs-und Fixierungsschienen an den Längsseiten des Aufnahmerahmens in voller Länge durchlaufen. Dann müßten die Funktionseinheiten insgesamt von der Schmalseite des Aufnahmerahmens, an dem die Anschlagleiste als separates Bauteil ausgeführt ist, eingeführt werden. Die Figuren zeigen jedoch nun insoweit ein besonders bevorzugtes Ausführungsbeispiel, als die Führungs- und Fixierungsschienen 5, 6 des Aufnahmerahmens 1 den Führungs- und Fixierungselementen 7 der Funktionseinheiten 2, 3, 4 entsprechende Einführausnehmungen 11, 12, 13 aufweisen. Das gibt also die in Fig. 1 dargestellte Möglichkeit, die Funktionseinheiten 2, 3, 4 von oben in den Aufnahmerahmen 1 einzuführen und dann so zu verschieben, daß die Führungs- und Fixierungselemente 7 die Führungs- und Fixierungsschienen 5, 6 hintergreifen; diese Art der Einführung der Funktionseinheiten 2, 3, 4 in den Aufnahmerahmen 1 ist in Fig. 1 durch Pfeile 14, 15 verdeutlicht.

Schließlich sei noch darauf hingewiesen, daß die Figuren insoweit ein bevorzugtes Ausführungsbeispiel zeigen, als die Funktionseinheiten 2, 3, 4 allseitig mit den Führungs- und Fixierungselementen 7 versehen sind. Die - im Ausführungsbeispiel quadratischen - Funktionseinheiten 2, 3, 4 können also in der dargestellten Richtung, aber auch in einer dazu senkrechten Richtung in den Aufnahmerahmen 1 eingeführt und dort fixiert werden.

## Patentansprüche

1. Türanlage, insbesondere Türsprechanlage, mit einem Gehäuse, einem rechteckigen Aufnahmerahmen, mehreren rechteckigen, vorzugsweise quadratischen Funktionseinheiten und gegebenenfalls Abdicht- und Verblendmitteln, wobei der Aufnahmerahmen im Gehäuse oder am Gehäuse vorgesehen und vorzugsweise schwenkbar und feststellbar mit dem Gehäuse verbunden ist und die Funktionseinheiten aufnimmt und wobei die Funktionseinheiten ein Funktionselement oder mehrere Funktionselemente, zum Beispiel einen Lautsprecher, ein Mikrofon, mindestens ein Namensschild und/oder mindestens eine Klingeltaste, und Führungs- und Fixierungselemente aufweisen, **dadurch gekennzeichnet,** daß der Aufnahmerahmen (1) innenseitig an seinen Längsseiten Führungs- und Fixierungsschienen (5, 6) und an seinen Schmalseiten nach außen gerichtete Anschlagleisten (8, 9) aufweist, daß eine Anschlagleiste (8) einstückig mit dem Aufnahmerahmen (1) und die zweite Anschlagleiste (9) als separates Bauteil ausgeführt ist, daß die zweite Anschlagleiste (9) schwenkbar an den Aufnahmerahmen (1) angeschlossen oder in Längsrichtung des Aufnahmerahmens (1) verschiebbar und in der Anschlagposition fixierbar ist und daß die Führungs- und Fixierungselemente (7) der Funktionseinheiten (2, 3, 4) im eingebauten Zustand die Führungs- und Fixierungsschienen (5, 6) des Aufnahmerahmens (1) hintergreifen.

2. Türanlage nach Anspruch 1, dadurch gekennzeichnet, daß die Führungs- und Fixierungsschienen (5, 6) des Aufnahmerahmens (1) einen rechteckigen Querschnitt aufweisen.

3. Türanlage nach Anspruch 1 oder 2, dadurch gekennzeichnet, daß die Führungs- und Fixierungsschienen (5, 6) an der nach außen gerichteten Seite des Aufnahmerahmens (1) in der äußeren Hauptebene des Aufnahmerahmens (1) liegen.

4. Türanlage nach einem der Ansprüche 1 bis 3, dadurch gekennzeichnet, daß die Führungs- und Fixierungsschienen (5, 6) des Aufnahmerahmens (1) den Führungs- und Fixierungselementen (7) der Funktionseinheiten (2, 3, 4) entsprechende Einführausnehmungen (11, 12, 13) aufweisen.

5. Türanlage nach einem der Ansprüche 1 bis 4, dadurch gekennzeichnet, daß die Funktionseinheiten (2, 3, 4) allseitig mit den Führungs- und Fixierungselementen versehen sind.

## Claims

1. A door installation, particularly a gate telephone, with a housing, a rectangular mounting frame, a plurality of rectangular, preferably square functional units, and optionally sealing and facing means, wherein the mounting frame is provided in the housing or on the housing and is preferably attached hinged and lockable to the housing and receives the functional units, and wherein the functional units comprise one functional element or a plurality of functional elements, for example a loudspeaker, a microphone, at least one nameplate and/or at least one bell push, and guiding and fixing elements, characterised in that the mounting frame (1) has guiding and fixing rails (5, 6) on the inside of its longitudinal faces, and outwardly directed fitting strips (8, 9) on its narrow faces, that one fitting strip (8) is in one piece with the mounting frame (1) and the second fitting strip (9) is constructed as a separate component, that the second fitting strip (9) is attached hinged to the mounting frame (1) or can be moved in the longitudinal direction of the mounting frame (1) and can be fixed in the stop position, and that in the assembled state the guiding and fixing elements (7) of the functional units (2, 3, 4) engage behind the guiding and fixing rails (5, 6) of the mounting frame (1).

2. A door installation according to claim 1, characterised in that the guiding and fixing rails (5, 6) of the mounting frame (1) have a rectangular cross-section.

3. A door installation according to claim 1 or 2, characterised in that the guiding and fixing rails (5, 6) are situated on the outwardly directed face of the mounting frame (1) in the outer principal plane of the mounting frame (1).

4. A door installation according to any one of claims 1 to 3, characterised in that the guiding and fixing rails (5, 6) of the mounting frame (1) have insertion recesses (11, 12, 13) corresponding to the guiding and fixing elements (7) of the functional units (2, 3, 4).

5. A door installation according to any one of claims 1 to 4, characterised in that the functional units (2, 3, 4) are provided with the guiding and fixing elements on all sides.

## Revendications

1. Installation pour porte, en particulier un interphone pour porte, munie d'un logement, d'un cadre de réception rectangulaire, de plusieurs unités fonctionnelles rectangulaires, de préférence quadratiques et éventuellement d'agents de recouvrement et de protection, le cadre de réception étant prévu dans le logement ou contre le logement et de préférence apte à pivoter et à être fixé avec le logement, le cadre de réception englobant les unités fonctionnelles, ces dernières présentant un ou plusieurs éléments fonctionnels, par exemple un haut-parleur, un microphone, au moins une plaque d'identité et/ou au moins un bouton de sonnette, ainsi que des éléments de guidage et de fixation, caractérisée en ce que le cadre de réception (1) présente, du côté intérieur, sur ses grands côtés, des rails de guidage et de fixation (5, 6) et, sur ses petits côtés, des rebords de butée (8, 9) dirigés vers l'extérieur, en ce qu'un rebord de butée (8) est réalisé en une seule pièce avec le cadre de réception (1) et le second rebord de butée (9) est réalisé sous forme d'un élément de construction séparé, en ce que le second rebord de butée (9) est relié en pivotement au cadre de réception (1) ou bien peut coulisser en direction longitudinale du cadre de réception (1) et peut venir se fixer dans la position de butée, et en ce que les éléments de guidage et de fixation (7) des unités fonctionnelles (2, 3, 4), à l'état monté, viennent s'encliqueter derrière les rails de guidage et de fixation (5, 6) du cadre de réception (1).

2. Installation pour porte selon la revendication 1, caractérisée en ce que les rails de guidage et de fixation (5, 6) du cadre de réception (1) présentent une section transversale rectangulaire.

3. Installation pour porte selon la revendication 1 ou 2, caractérisée en ce que les rails de guidage et de fixation (5, 6) viennent s'appuyer contre le côté du cadre de réception (1) dirigé vers l'extérieur, dans le plan principal externe du cadre de réception (1).

4. Installation pour porte selon l'une quelconque des revendications 1 à 3, caractérisée en ce que les rails de guidage et de fixation (5, 6) du cadre de réception (1) présentent des évidements d'insertion (11, 12, 13) correspondant aux éléments de guidage et de fixation (7) des unités fonctionnelles (2, 3, 4).

5. Installation pour porte selon l'une quelconque des revendications 1 à 4, caractérisée en ce que les unités fonctionnelles (2, 3, 4) sont munies, sur tous leurs côtés, des éléments de guidage et de fixation.
